# EUROPEAN PATENT APPLICATION

(11) **EP 2 907 375 A1**
(43) Date of publication of application: **19.08.2015**
(21) Application number: 14199156.2
(22) Date of filing: 19.12.2014
(51) Int. Cl.: A01G 27/00

(54) **An irrigation device for the controlled release of a liquid**

(30) Priority: 18.02.2014 IT MO20140035
(71) Applicant: G.F. S.r.l., 42015 Correggio (Reggio Emilia) (IT)
(72) Inventor: Righi, Cesare Mattia, 41017 Ravarino (Modena) (IT)
(74) Representative: Paparo, Aldo

(57) **Abstract**

An irrigation device (1) for the controlled release of a liquid, and suitable for being partially inserted into the ground (2) to be irrigated, comprises an elongated body (3) extending along a longitudinal axis (X) and comprising an irrigation portion (4a) configured to be inserted into the ground and a connection portion (4), opposite the irrigation portion (4a) along the longitudinal axis (X), configured to be associated with a container for a liquid. A means for the controlled release of the liquid is arranged inside the elongated body (3) and is suitable for being set in fluid communication with the container. A stabilizing flange (5) defines a planar stabilizing surface (6) extending perpendicularly to the longitudinal axis (X) of the elongated body (3) away from the elongated body itself and it is configured so as to be rested on the ground (2) to be irrigated.

## Description

The object of the present invention is an irrigation device for the controlled release of a liquid towards the ground and coming from any container.

In particular, the object of the present invention is constituted by an irrigation device with improved stability, for example suitable for use in pots or containers.

Currently, said devices have connecting means on one end for connection with the neck of a bottle, and a wedge on the other end, by means of which they can be set into the ground. It is important that such devices are positioned perpendicularly to the ground, which often coincides with the force of gravity, and that they remain aligned with the same perpendicular in the course of operation, as possible inclination of the device-container system with respect to gravity and/or the ground could make the dripping procedure inefficient. External agents such as gusts of wind or landslides or other external causes can trigger rotation of the above-mentioned system, which is further magnified owing to the heavy weight of the container, particularly if the latter is full of liquid. Rotation of the device can be due for example to instability of the equilibrium position of the mass of the container, - the mass can tend to magnify even very small misalignments between the direction of gravity and the axis of the container - or to other external causes such as relative movements of the ground.

It should also be noted that the possibility that the device will rotate increases as the length of the wedge to be inserted in the ground decreases, in that the resistance that the ground opposes to rotation of the device is directly proportional to the surface area of contact with the wedge and to its extension in depth, which increases with the relative length thereof. With decreasing depth of the ground below the irrigation device, particularly in the case of small pots, resistance to possible rotation of the device can decrease significantly.

Irrigation devices for the controlled release of a liquid do not currently provide measures hindering and possibly preventing the inclination thereof with respect to the ground once they have been set therein.

One objective of the present invention is to provide an irrigation device for the controlled release of a liquid that is stable on the ground and thus capable of preventing rotation, tilting with respect to the vertical, once the same device has been set into the ground or in any case, fixed with respect to the ground.

A further objective of the present invention is to provide an irrigation device that is simple, economical and unlikely to undergo wear and tear.

According to an aspect of the invention, these objectives are achieved by means of an irrigation device comprising a stabilizing flange defining a planar stabilizing surface that extends perpendicularly to the longitudinal axis of the elongated body of the irrigation device away from the elongated body itself and that is configured to be rested on the ground to be irrigated, in which the stabilizing flange delimits the irrigation portion with respect to the longitudinal axis of the elongated body.

Owing to the presence of a stabilizing flange suitable for being rested on the ground, the irrigation portion, that is, the portion designed to be inserted in the ground, is properly and unequivocally defined, and together with the presence of the stabilizing surface, it effectively makes it possible to prevent inclination of the device, even when the weight is a high owing to the mass of the liquid present therein. Moreover, the use of the stabilizing flange makes it possible to realize a structure that is unlikely to undergo wear and tear and that is simple in that it is constituted mainly by the elongated body and the stabilizing flange.

According to a further aspect, the present invention concerns a stabilizing flange for an irrigation device for the controlled release of a liquid and suitable for being partially inserted into the ground to be irrigated. The stabilizing flange comprises coupling means for coupling with an elongated body of the irrigation device and it defines a planar stabilizing surface suitable for extension perpendicularly to a longitudinal axis of the elongated body away from the elongated body itself and that is configured to be rested on the ground to be irrigated.

As it comprises a stabilizing flange realized as a separate piece with respect to the elongated body of the irrigation device, it is possible to adapt devices already in use.

One or more of the following characteristics can be comprised in one or more of the aspects indicated above.

The stabilizing flange preferably comprises a central portion, which is proximal with respect to the longitudinal axis, and at least three projecting portions projecting from the central portion away from the longitudinal axis and preferably distributed uniformly with respect to the longitudinal axis. This configuration and distribution enable stable support in at least three portions distributed around the longitudinal axis. In particular, the support is further improved in the case in which the three projecting portions are uniformly distributed around the longitudinal axis, for example at about 120° with respect to each other.

Preferably, the stabilizing flange comprises means for varying geometry configured to change the planar stabilizing surface from an extended configuration to a contained configuration and/or vice versa.

In other words, the means for varying geometry is intended as at least one means that is suitable for varying the geometry, and preferably suitable for varying the extension and the plan dimensions of the stabilizing flange. These characteristics make it possible to vary the geometry of the stabilizing flange in a convenient and immediate manner, while maintaining in any case good efficacy in the stabilization of the device with respect to possible rotations. Moreover, as may often happen, in those cases in which it may be necessary to install the irrigation devices in the proximity of areas where space is limited owing to the presence of structural parts or other elements such as plants for example, the extension of the stabilizing flange could interfere with its positioning. Furthermore, it could frequently be the case that one wishes to place the device in spaces of varying extension and for that purpose it would be necessary to have available and thus produce stabilizing flanges of different dimensions, resulting in increased costs, unless difficult procedures are performed by the user so as to reduce the dimensions of the flanges.

Therefore, these characteristics make it possible to install the irrigation device even in portions of the ground that are limited in area and thus its capacity to block rotation/inclination of the device with respect to the ground. Furthermore, owing to the presence of the means for varying geometry, the user is offered the possibility of conveniently varying the dimensions of the stabilizing flange, particularly of the stabilizing surface, for the purpose of placing it within spaces that are more or less limited in any manner whatsoever.

Preferably, the means for varying geometry can operate in a reversible manner or in an irreversible manner.

In accordance with a possible embodiment, the means for varying geometry comprises at least a first part of the stabilizing flange that is detachable from at least a second part of the stabilizing flange. The means for varying geometry preferably comprises a weakening line interposed between the first part and the second part and configured so as to facilitate detachment of the first part from the second part.

According to a possible embodiment, at least a first part of the stabilizing flange can be at least partially detached at least from a second part of the stabilizing flange, for example by means of a removable connection that allows for removal of the first part and for subsequent and thus reversible reattachment, or as a line of weakening that enables convenient separation of the first part from the second part definitively, and thus irreversibly, unless repairs are made.

These characteristics make it possible to reduce the extension of the stabilizing surface easily and immediately without introducing structural and/or functional complications which would have a negative impact on production costs.

In accordance with a possible embodiment, the means for varying geometry comprises at least a first part of the stabilizing flange that is suitable for being moved with respect to at least a second part of the stabilizing flange, so as to pass at least from a first position, in which the first and second parts are substantially aligned so as to form said planar stabilizing surface, to a second position, in which the planar stabilizing surface is substantially defined by the second part. Preferably, the first part of the stabilizing flange is suitable for being rotated with respect to the second part of the stabilizing flange so as to pass at least from the first position to the second position, in which the first and second parts are inclined with respect to each other. In particular, the first part of the stabilizing flange is suitable for being moved with respect to the second part of the stabilizing flange by means of at least one rigid motion, preferably a rigid rotation. The means for varying geometry preferably comprises a hinge.

In other words, at least a first part of the stabilizing flange can be moved with respect to at least a second part of the stabilizing flange by means of at least one rigid motion, as could be the case of a hinge that makes it possible to rigidly rotate for example a projecting portion of the stabilizing flange with respect to a central portion thereof and then reversibly have it return to the starting position.

These characteristics make it possible to vary the stabilizing surface easily and immediately so as to decrease and to increase its extension, that is, to adapt it reversibly to different situations of use.

Alternatively, the stabilizing flange is suitable for being moved, preferably rotated, with respect to the second part of the stabilizing flange by means of at least one deformation of a portion of the stabilizing flange. The means for varying geometry preferably comprises a line of weakening interposed between the first part and the second part, in which the line of weakening is configured so as to facilitate the rotation of the first part with respect to the second part.

In other words, at least a first part of the stabilizing flange can be moved with respect to at least a second part of the stabilizing flange by means of at least a deformation, which could be a line of weakening that enables the stabilizing flange to be bent by moving for example a projecting portion thereof with respect to a central portion thereof.

These characteristics make it possible to achieve a reversible change in the extension of the stabilizing surface in a simple and effective manner. If the geometry of the stabilizing flange can be changed in a reversible manner, it offers the advantage of being reusable with the configuration preceding the change in geometry, thus offering the user the option of conveniently changing the dimensions in a reversible manner.

In accordance with a possible embodiment, there is comprised a limiting means configured so as to limit at least partially and along at least one direction, the movement, preferably the rotation, of the first part with respect to the second part.

The limiting means provides the stabilizing flange with resistance to rotation, when the stabilizing flange is in the most extended configuration, a resistance that is substantially similar to the resistance that would be obtained if the means for varying geometry were not present. This makes it possible to avoid the occurrence of a possible drawback such that when the stabilizing flange tends to tilt on the ground, the part on which the greatest pressure is exerted is not capable of opposing the rotation of the irrigation device given that the first part is raised with respect to second part.

The limiting means is preferably configured so as to keep the first part in the first position during insertion of the elongated body into the ground and/or in the case of inclination of the stabilizing flange on the ground.

The limiting means preferably comprises at least one abutment portion of the first part that is suitable for overlapping at least partially the second part in the first position. In particular, the abutment portion limits at least partially and at least in one direction, the rotation of the first part abutting against the second part. Preferably, at least one seat at least partially complementary to the abutment portion is afforded in the second part and the seat is configured so as to receive the abutment portion in the first position of the first part. In particular, the seat opens at least partially along a surface of the stabilizing flange, opposite the planar stabilizing surface. The presence of an abutment surface makes the resistance of the stabilizing flange substantially similar to that of a stabilizing flange that is not equipped with movable parts. Moreover, owing to the seat that houses the abutment portion, the first and second parts are substantially aligned in the first position.

In accordance with a possible embodiment, the means for varying geometry is configured so as to define a second position of the first part, in which the first part is suitable for being wedged into the ground. In this manner, it is possible to obtain an additional stabilizing effect that cooperates with the presence of the stabilizing surface.

In accordance with a possible embodiment, each projecting portion comprises a first part that is detachable from at least a second part of the projecting portion and/or of said central portion. In accordance with a different embodiment, each projecting portion comprises a first part that is movable with respect to at least a second part of the projecting portion and/or of the central portion. In other words, the first part of the stabilizing flange can consist of a part of the projecting portion or the entire projecting portion. In the case of a number of projecting portions projecting from a central portion, the central portion defines the second part of the stabilizing flange for all the projecting portions.

Preferably, the edge of at least one projecting portion is at least partly curved in shape and at least two consecutive projecting portions are connected by a curved line, the convexity of which faces the longitudinal axis.

This shape enables convenient installation even in tight or in any case, rather small spaces, including for example near the structural parts of a pot, other plants and/or corners. In particular, the presence of a recess oriented towards the centre of the stabilizing flange and that is preferably a curve, the convexity of which is directed towards the longitudinal axis, enables the creation of a free zone for the possible presence of external elements which would otherwise interfere with the positioning of the stabilizing flange.

The stabilizing flange is preferably fashioned as a single piece with at least one portion of the elongated body.

There is preferably provided a coupling means for coupling the elongated body and the stabilizing flange fashioned as a separate piece with respect to the elongated body. In particular, the coupling means comprises an opening afforded in the stabilizing flange and that is complementary to the outer outline of the elongated body.

In this manner, irrigation devices already in use can also be adapted simply and quickly.

Preferably, the coupling means comprises a fork afforded in the stabilizing flange and extending centrally in the opening, said fork being complementary to a portion of the outline of the elongated body.

The characteristics of the present invention shall be clarified in the following detailed description, which is to be considered as a non-limiting example of the most general concepts claimed.

This detailed description refers to the attached figures, of which:
- Figure 1 is a schematic front view of a portion of an irrigation device in use;
- Figure 2 is a schematic front view of a possible embodiment of an irrigation device according to the present invention;
- Figures 3 and 4 are schematic views in perspective of a possible embodiment of an irrigation device, disassembled and assembled, respectively, according to the present invention;
- Figures 5 and 6 are a schematic plan view and a schematic view in perspective, respectively, of a first embodiment of a stabilizing flange according to the present invention;
- Figures 7 and 8 are a schematic plan view and a schematic view in perspective, respectively, of a second embodiment of a stabilizing flange according to the present invention;
- Figures 9 and 10 are schematic views in perspective of the first embodiment of Figures 5-6 and of the second embodiment of Figures 7-8, respectively, in a different operating state;
- Figure 11 is a sectional view taken along line A-A indicated in Figure 7, in a possible operating state;
- Figure 12 is a sectional view taken along line A-A of Figure 7, in a different operating state.

An irrigation device for the controlled release of a liquid, suitable for being partially inserted in the ground 2 to be irrigated and comprising an elongated body 3 extending along a longitudinal axis X, is indicated in its entirety by the number 1.

The term "elongated body" is understood as a body that extends prevalently in one direction, particularly along the direction defined by the longitudinal axis X. In other words, the elongated body 3 has a prevalent direction with respect to the others; in particular, the dimensions of the elongated body 3 measured transversely to the longitudinal axis X are smaller than the length of the elongated body 3 measured along the longitudinal axis X.

A connection portion configured to be associated with a container of liquid (unillustrated) is indicated by the number 4.

An irrigation portion configured to be inserted in the ground is indicated by the number 4a. The connection portion 4 is opposite the irrigation portion along the longitudinal axis X.

The irrigation device 1 comprises means (unillustrated) for the controlled release of the liquid; said means is arranged inside the elongated body 3 and is suitable for being set in fluid communication with the container.

The irrigation device 1 comprises a stabilizing flange 5 defining a planar stabilizing surface 6 that extends perpendicularly to the longitudinal axis X of the elongated body 3 away from the elongated body itself and that is configured to be rested on the ground 2 to be irrigated.

The stabilizing flange 5 delimits the irrigation portion 4a with respect to the longitudinal axis X of the elongated body 3.

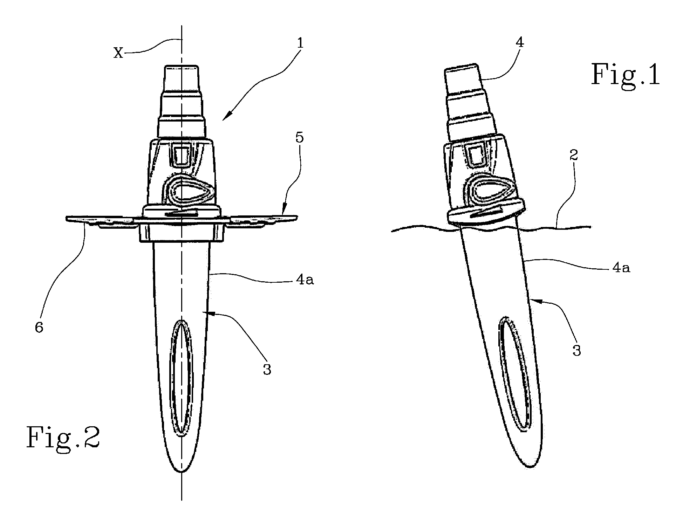

In Figure 1, the elongated body 3, without the stabilizing flange, is inserted in the ground 2 and it is inclined with respect to the ground, in that it is not capable of opposing rotation about any axis that is more or less parallel to the ground and that in this case is perpendicular to the plane appearing in the figures. In Figure 2, however, one can observe the irrigation device 1 comprising the stabilizing flange 5, which, owing to the presence of the stabilizing surface 6, fully resists rotation in the plane of Figure 2.

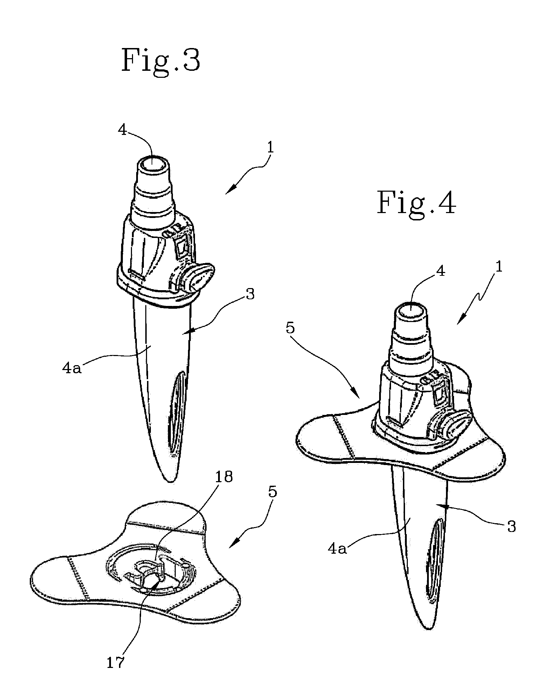

Figures 3 and 4 illustrate the irrigation device 1 in which the elongated body 3 and the stabilizing flange 5 are shown separated from each other and constrained to each other, respectively.

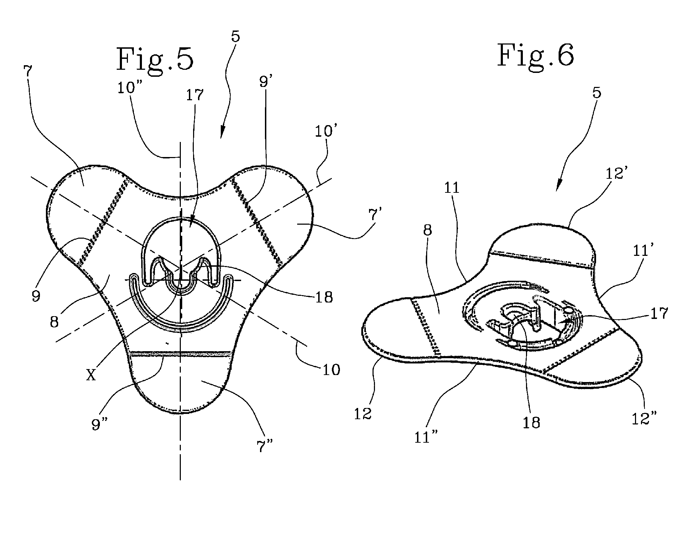

Referring to Figures 5 and 6, which illustrate a possible embodiment of the stabilizing flange 5, reference numbers 7, 7' and 7" respectively indicate three projecting portions that extend away from a central portion 8, which is proximal with respect to the longitudinal axis X. The projecting portions 7, 7' and 7", as illustrated in Figures 5 and 6, are distributed uniformly with respect to the longitudinal axis X, that is, at about 120° with respect to each other in the case in which there are three projecting portions.

In other words, with 10, 10', and 10" indicating respective lines of extension of each projecting portion away from the longitudinal axis X, the inclination between the lines of extension of two consecutive projecting portions is approximately 120°. In the case of a distribution that is not uniform and/or with a different number of projecting portions, the inclination of the lines of extension of two consecutive projecting portions is such as to ensure the presence of at least three resting points that are not aligned and not arranged in the arc of 180°.

In general terms, the stabilizing flange 5 has at least three resting points for resting it on the ground and that are distributed angularly and spaced about the longitudinal axis X so as to ensure the stability thereof.

In particular, these resting points are identifiable at the three respective projecting portions 7, 7', 7", if present, which extend and develop prevalently along three different respective lines of extension that are inclined with respect to each other in such a manner that the arrangement of the projecting portions 7, 7', 7" ensures good stability of the stabilizing flange 5.

For example, the first line of extension is inclined at an angle greater or equal to 90 degrees with respect to the second line, and the latter, in turn, is inclined at an angle greater or equal to 90 degrees with respect to the third line, in such a manner as to achieve good resting efficacy and the creation of sufficient opposing action of the ground to possible inclinations of the irrigation device.

As indicated in Figure 6 for example, at least two consecutive projecting portions are connected by a respective curved line 11, 11', 11", the convexity of which faces the longitudinal axis X. Preferably, an edge 12, 12', 12" of at least one projecting portion 7, 7', 7" is at least partly curved in shape, comprising for example a circular arc.

In accordance with a possible embodiment, at least a first part of the stabilizing flange is detachable from at least a second part of the stabilizing flange. In particular, reference numbers 9, 9' and 9" indicate lines of weakening, each being interposed between a first part and a second part of the stabilizing flange. Each line of weakening is preferably configured so as to facilitate detachment of the first part from the second part.

If present, each projecting portion 7, 7', 7" can comprise a first part that is detachable from at least a second part of the projecting portion and/or of the central portion. In the example illustrated in Figures 5-6, each projecting portion 7, 7', 7" defines a first part that is detachable from a single central portion 8.

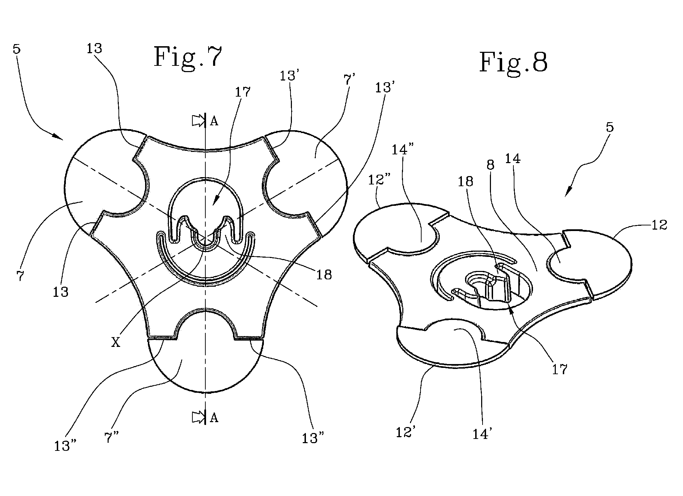

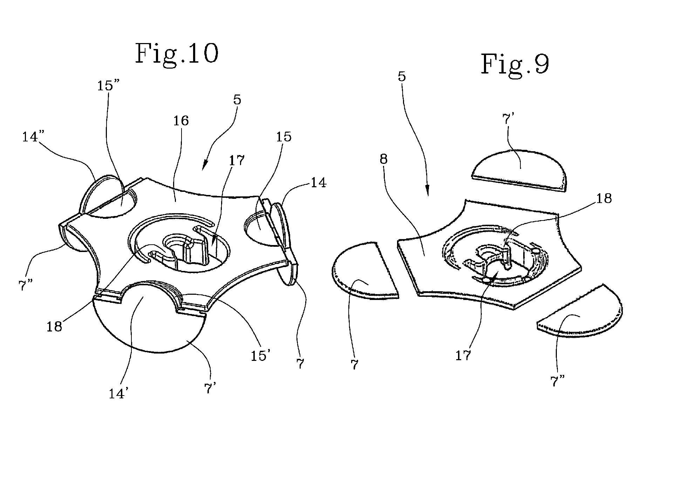

The embodiment illustrated in Figures 7 and 8 differs from that appearing in Figures 5 and 6 in terms of the procedures for fastening and moving the first part of the stabilizing flange 5 with respect to the second part of the stabilizing flange. In fact, in this case, at least a first part of the stabilizing flange is suitable for being moved with respect to at least a second part of the stabilizing flange so as to pass at least from a first position (Figures 7-8), in which the first and second parts are substantially aligned so as to form the planar stabilizing surface, to a second position (Figure 10), in which the planar stabilizing surface 6 is substantially defined by the second part.

In accordance with a possible embodiment, the first part of the stabilizing flange 5 is suitable for being rotated with respect to the second part of the stabilizing flange so as to pass at least from the first position to the second position, in which the first and second parts are inclined with respect to each other (Figure 10). In particular, reference numbers 13, 13', 13" indicate respective hinges, each one being interposed between a first and a second part of the stabilizing flange, so that the first part of the stabilizing flange is suitable for being moved with respect to the second part of the stabilizing flange by means of at least one rigid motion, particularly a rigid rotation.

According to a possible alternative embodiment, which is not illustrated herein, in place of the hinge, there can be comprised a line of weakening interposed between each first and second part and configured so as to facilitate the rotation of the first part with respect to the second part. In other words, the first part of the stabilizing flange is suitable for being moved, preferably rotated, with respect to the second part of the stabilizing flange, by means of at least one deformation of a portion of the stabilizing flange.

As in the example shown in Figures 5-6, if present, each projecting portion 7, 7', 7", can comprise a first part that is movable/rotatable with respect to at least a second part of the projecting portion and/or of the central portion. In the example illustrated in Figures 7-8, each projecting portion 7, 7', 7" defines a first part that is rotatable with respect to a single central portion 8.

In Figure 9, the first embodiment illustrates the projecting portions 7, 7' and 7" (first parts) once they have been separated from the central portion 8 of the stabilizing flange 5 (second part) for the purpose of reducing the plan area thereof to a minimum, whereas in Figure 10, which refers to the second embodiment, the projecting portions 7, 7' and 7" are turned downwards with respect to the central portion 8 (that is, on the stabilizing surface 6 side) for the same purpose. The fact that only some of the projecting portions 7, 7' and 7" can be detached or turned allows for a flexibility of use of the stabilizing flange 5.

In other words, and according to a more general aspect of the invention, the stabilizing flange 5 comprises means for varying geometry configured to change the planar stabilizing surface 6 from an extended configuration (Figures 5-8) to a contained configuration (Figures 9-10) and/or vice versa. With reference to the embodiments described, the means for varying geometry comprises at least the first part and at least the second part associated one with the other, for example as described previously.

In particular, the means for varying geometry can be configured so as to define a second position (Figure 10), in which the first part is suitable for being wedged into the ground. For example, in the embodiment illustrated in Figures 7, 8 and 10, the downward rotation of the first part with respect to the second part can bring about a useful effect of fastening it to the ground derived from its being wedged into the ground.

With reference to a general embodiment of the invention, the means for varying geometry can be configured to operate in a reversible or irreversible manner. For example, the use of a line of weakening for detaching the first part from the second part can generate means for varying geometry of a removable and irreversible type, whereas the use of a hinge for rotating the first part with respect to the second part can generate reversible means for varying geometry defining a rigid connection.

In accordance with a possible embodiment, there can be comprised limiting means configured to limit at least partially and along at least one direction, the movement, preferably the rotation, of the first part with respect to the second part.

In particular, it is preferable that the means for varying geometry be capable of guaranteeing a resistance to rotation between the first part and the second part of the stabilizing flange, when the latter is in the extended configuration, a resistance that is substantially equal to the resistance that would be obtained in the absence of a means for varying geometry.

For example the limiting means can be configured so as to keep the first part in its first position during insertion of the elongated body 3 into the ground 2 and/or in the case of inclination of the stabilizing flange 5 with respect to the ground 2.

According to a possible embodiment, of which Figures 7, 8 and 10 illustrate a non-limiting example, the limiting means can comprise at least one abutment portion 14, 14', 14" of the first part. The abutment portion 14, 14', 14" is suitable for overlapping at least partially the second part when the first part is found in the first position.

In the case in which the first part can rotate with respect to the second part, the abutment portion 14, 14', 14" limits at least partially and at least in one direction, the rotation of the first part abutting against the second part. In particular, the limiting means can be configured to limit the rotation of the first part along a direction opposite the direction of the rotation that brings the first part from the first position to the second position, as illustrated for example in Figures 7 and 8.

Preferably, at least one seat 15, 15', 15" at least partially complementary to the abutment portion14, 14', 14" is afforded in the second part. For example, the seat 15, 15', 15" is configured so as to receive the abutment portion 14, 14', 14" in the first position of the first part.

In particular, the seat 15, 15', 15" opens at least partially along a surface 16 of the stabilizing flange 5, opposite the planar stabilizing surface 6. The seats 15, 15' and 15" afforded in the second part of the stabilizing flange 5, preferably in the central portion 8 of the stabilizing flange 5, are also observable in Figure 10.

The limiting means described hereinabove, in particular comprising abutment portions and possibly seats configured so as to receive the abutment portions, can also be utilized in different embodiments, for example embodiments in which the first parts, in particular the projecting portions 7, 7', 7", are rotated by means of deformation, and thus they do not have hinges.

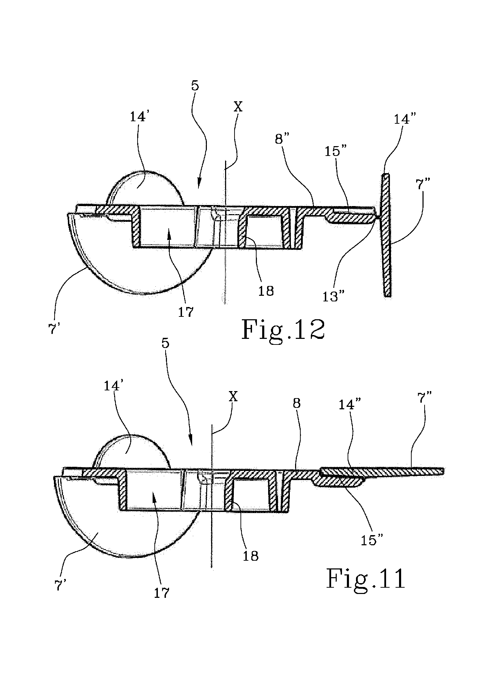

In Figure 11, the projecting portion 7', which has not been sectioned, represents a first part that proves to be turned downwards, while the projecting portion 7", which has been sectioned, represents a first part that is aligned with the central portion 8 of the stabilizing flange 5. The coupling of the seat 15" afforded in the central portion 8 with the abutment portion 14" of the projecting portion 7" acts in such a manner that when the stabilizing flange tends to rotate so as to tilt downwards towards the projecting portion 7", the lower face of the abutment portion 14" presses on the seat 15", so that the projecting portion 7" resists rotation, as if the hinge were not present and the stabilizing flange were monolithic.

In Figure 12, in which the projecting portion 7" is also rotated by means of a hinge 13", it is more clearly observable that the seat 15" is complementary to the abutment portion14" and that it opens on the upper surface of the stabilizing flange 5, opposite the stabilizing surface 6 that rests on the ground.

In general, there could also be a stabilizing flange with at least one projecting portion 7 (first part) that is detachable and at least one projecting portion (first part) that rotates rigidly, or with any combination of types of rigid or deformable constraints or a mixture thereof, which in any case, enable movement between the first part and the second part.

In the case in which lines of weakening are present and suitable for enabling rotation or detachment of the first part with respect to the second part, the limiting means can be integrated in the same weakening lines. In other words, the weakening lines can be configured so as to limit rotation between the first and the second parts; for example, the lines of weakening can be suitably reinforced and resistant for that purpose. In general, a line of weakening can be configured to resist the rotation of the first part and the second part with respect to each other, in such a manner that for example the line of weakening can be split only if it is subjected to a stress of a given magnitude and/or along a given direction, so that it can be broken only by the user.

According to a possible (and unillustrated) embodiment, the stabilizing flange 5 is fashioned as a single piece with at least one portion of the elongated body 3.

Alternatively, as illustrated for example in the attached figures, there is provided a coupling means for coupling the elongated body 3 and the stabilizing flange 5 fashioned as a separate piece with respect to the elongated body.

According to a possible embodiment, of which the attached figures constitute a non-limiting example, the coupling means comprises an opening 17 afforded in the stabilizing flange 5 and that is complementary to the outer outline of the elongated body 3. Preferably, there is comprised a fork 18 afforded in the stabilizing flange 5 and extending centrally in the opening 17. The fork 18 is complementary to a portion of the outline of the elongated body 3.

## Claims

1. An irrigation device (1) for the controlled release of a liquid, which irrigation device (1) is suitable for being partially inserted into the ground (2) to be irrigated, comprising an elongated body (3) extending along a longitudinal axis (X) and comprising an irrigation portion (4a), configured so as to be inserted into the ground, and a connection portion (4), opposite the irrigation portion (4a) along said longitudinal axis (X) and configured to be associated with a container for a liquid, means for the controlled release of the liquid, said means being arranged inside said elongated body (3) and suitable for being set in fluid communication with said container, **characterized in that** it comprises a stabilizing flange (5) defining a planar stabilizing surface (6) that extends perpendicularly to the longitudinal axis (X) of the elongated body (3) away from the elongated body and that is configured to be rested on the ground (2) to be irrigated.

2. The irrigation device according to claim 1, wherein said stabilizer flange (5) comprises a central portion (8), which is proximal with respect to the longitudinal axis (X), and at least three projecting portions (7, 7', 7") projecting from said central portion (8) away from said longitudinal axis (X) and preferably distributed uniformly with respect to said longitudinal axis (X).

3. The irrigation device according to claim 1 or 2, wherein said stabilizing flange (5) comprises means for varying geometry, said means being configured so as to change said planar stabilizing surface (6) from an extended configuration to a contained configuration and/or vice versa.

4. The irrigation device according to claim 3, **characterized in that** said means for varying geometry is configured to operate in a reversible manner.

5. The irrigation device according to claim 3, **characterized in that** said means for varying geometry is configured to operate in an irreversible manner.

6. The device according to one or more of claims 3-5, **characterized in that** said means for varying geometry comprises at least a first part (7, 7', 7") of said stabilizing flange (5) that is detachable from at least a second part (8) of said stabilizing flange (5).

7. The irrigation device according to claim 6, **characterized in that** said means for varying geometry comprises a weakening line (9, 9', 9") interposed between said first part and said second part, said weakening line being configured so as to facilitate detachment of the first part from the second part.

8. The irrigation device according to one or more of claims 3-5, **characterized in that** said means for varying geometry comprises at least a first part of said stabilizing flange (5) that is suitable for being moved with respect to at least a second part of said stabilizing flange (5) so as to pass at least from a first position, wherein said first and second parts are substantially aligned so as to form said planar stabilizing surface (6), to a second position, wherein said planar stabilizing surface (6) is substantially defined by said second part (8).

9. The irrigation device according to claim 8, wherein said first part of said stabilizing flange (5) is suitable for being rotated with respect to said second part of said stabilizing flange (5) so as to pass at least from said first position to said second position, wherein said first and second parts are inclined with respect to each other.

10. The irrigation device according to claim 8 or 9, wherein said first part of said stabilizing flange (5) is suitable for being moved with respect to said second part of said stabilizing flange (5) by means of at least one rigid motion, preferably a rigid rotation.

11. The irrigation device according to claim 9 or 10, **characterized in that** said means for varying geometry comprises a hinge (13, 13', 13").

12. The irrigation device according to claim 8 or 9, wherein said first part of said stabilizing flange (5) is suitable for being moved, preferably rotated, with respect to said second part of said stabilizing flange (5) by means of at least one deformation of a portion of the stabilizing flange.

13. The irrigation device according to claim 9 or 12, **characterized in that** said means of varying geometry comprises a line of weakening interposed between said first part and said second part, said line of weakening being configured so as to facilitate the rotation of the first part with respect to the second part.

14. The irrigation device according to one or more of claims 6-13, **characterized in that** it comprises limiting means configured so as to limit at least partially and along at least one direction, the movement, preferably the rotation, of said first part with respect to said second part.

15. The irrigation device according to claim 14, wherein said limiting means is configured so as to keep said first part in said first position during insertion of said elongated body (3) into the ground (2) and/or in the case of inclination of the stabilizing flange (5) on the ground (2).

16. The irrigation device according to claim 14 or 15, when dependent on claim 9, wherein said limiting means comprises at least one abutment portion (14, 14', 14") of said first part that is suitable for overlapping at least partially said second part in said first position.

17. The irrigation device according to claim 16, wherein said abutment portion (14, 14', 14") limits at least partially and at least in one direction, the rotation of said first part abutting against said second part.

18. The irrigation device according to claim 16 or 17, **characterized in that** at least one seat (15, 15', 15") at least partially complementary to said abutment portion (14, 14', 14") is afforded in said second part, said seat (15, 15', 15") being configured so as to receive said abutment portion (14, 14', 14") in said first position of the first part.

19. The irrigation device according to claim 18, **characterized in that** said seat (15, 15', 15") opens at least partially along a surface (16) of said stabilizing flange (5), opposite said planar stabilizing surface (6).

20. The irrigation device according to one or more of claims 8-19, wherein said means for varying geometry is configured so as to define a second position of said first part, wherein said first part is suitable for being wedged into the ground.

21. The irrigation device according to claim 6 or 7, when dependent on claim 2, wherein each projecting portion (7, 7', 7") comprises a first part that is detachable from at least a second part of said projecting portion (7, 7', 7") and/or of said central portion (8).

22. The irrigation device according to one or more of claims 8-20, when dependent on claim 2, wherein each projecting portion (7, 7', 7") comprises a first part that is movable with respect to at least a second part of said projecting portion (7, 7', 7") and/or of said central portion (8).

23. The irrigation device according to claim 21 or 22, **characterized in that**:
- one edge (12) of at least one projecting portion (7, 7', 7") is at least partly curved in shape;
- at least two consecutive projecting portions (7, 7', 7") are connected by a curved line (11, 11', 11 "), the convexity thereof faces said longitudinal axis (X).

24. The irrigation device according to one or more of the preceding claims, wherein said stabilizing flange (5) is fashioned as a single piece with at least one portion of said elongated body (3).

25. The irrigation device according to one or more of the preceding claims, comprising coupling means for coupling said elongated body (3) and said stabilizing flange (5) fashioned as a separate piece with respect to said elongated body (3).

26. The irrigation device according to claim 25, wherein said coupling means comprises an opening (17) afforded in said stabilizing flange (5) and that is complementary to the outer outline of the elongated body (3).

27. The irrigation device according to claim 26, wherein said coupling means comprises a fork (18) afforded in said stabilizing flange (5) and extending centrally in said opening (17), said fork (18) being complementary to a portion of the outline of the elongated body (3).

28. A stabilizing flange (5) for an irrigation device (1) for the controlled release of a liquid, which irrigation device (1) is suitable for being partially inserted into the ground (2) to be irrigated, said stabilizing flange comprising coupling means for the coupling thereof with an elongated body (3) of said irrigation device (1), wherein said stabilizing flange (5) defines a planar stabilizing surface (6) that is suitable for being extended perpendicularly to a longitudinal axis (X) of the elongated body (3) away from the elongated body, in an assembled configuration with the elongated body, and that is configured to be rested on the ground (2) to be irrigated, and wherein said stabilizing flange (5) is suitable for delimiting an irrigation portion (4a), with respect to the longitudinal axis (X) of the elongated body (3), said irrigation portion (4a) being configured so as to be inserted into the ground (2).
